(19) **Europäisches Patentamt**
European Patent Office
Office européen des brevets

(11) **EP 1 902 272 B1**

(12) **EUROPÄISCHE PATENTSCHRIFT**

(45) Veröffentlichungstag und Bekanntmachung des Hinweises auf die Patenterteilung:
**20.10.2010 Patentblatt 2010/42**

(21) Anmeldenummer: **06777649.2**

(22) Anmeldetag: **07.07.2006**

(51) Int Cl.:
**G01B 13/20** (2006.01)

(86) Internationale Anmeldenummer:
**PCT/EP2006/064019**

(87) Internationale Veröffentlichungsnummer:
**WO 2007/006756 (18.01.2007 Gazette 2007/03)**

(54) **VERFAHREN ZUR ERMITTLUNG DES QUERSCHNITTS EINES LEITERS**

METHOD FOR DETERMINING A CONDUCTOR CROSS-SECTION

PROCEDE POUR DETERMINER LA SECTION D'UN CONDUCTEUR

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **14.07.2005 EP 05015351**

(43) Veröffentlichungstag der Anmeldung:
**26.03.2008 Patentblatt 2008/13**

(73) Patentinhaber: **SIEMENS AKTIENGESELLSCHAFT**
**80333 München (DE)**

(72) Erfinder: **LEHMANN, Christoph**
**47506 Neukirchen-Vluyn (DE)**

(56) Entgegenhaltungen:
**DE-B- 1 051 520     US-A- 5 207 089**

**Beschreibung**

Ein Generator umfasst im Wesentlichen einen Stator und einen drehbar gelagerten Läufer. Sowohl der Stator als auch der Läufer weisen hohl gebohrte Kupferleitungen auf. Um die Erwärmung des Generators zu begrenzen, müssen der Stator und der Läufer gekühlt werden. Es gibt im wesentlich drei wichtige Arten der Kühlung: Frischluftkühlung: über ein Gebläse wird Frischluft angesaugt, durch entsprechende Filter gereinigt und in den Generator eingeblasen. Geschlossener Kreislauf: die gereinigte Luft wird in einem geschlossenen Kreislauf durch den Generator geblasen und in Wärmetauschern durch Kühlwasser wieder abgekühlt. Die Abwärme kann auch zu Heizzwecken verwendet werden. Reinwasserkühlung: bei Generatoren mit großer Leistung wird eigens aufbereitetes Wasser durch den Generator in einen geschlossenen Kreislauf geleitet. Wasserstoffkühlung: der in einem Kreislauf bewegte gasförmige Wasserstoff gibt über die an den Seiten der Generatoren angebrachten Wasserkühler die Verlustwärme ab. Das Gehäuse der Generatoren muss dabei gasdicht und druckfest ausgeführt sein, um auch einer eventuellen Knallgasexplosion standhalten zu können. Die Verwendung von Wasserstoffgas anstelle der Luft bewirkt geringere Gasreibungsverluste und doppeltes Wärmeabfuhrvermögen. Dabei muss aber zwischen Wasserkraftgeneratoren und Turbogeneratoren (in Wärmekraftwerken) unterschieden werden.

Es ist hierbei üblich, ein als Kühlmittel wirkendes Strömungsmedium durch einen Kühlkanal der Kupferleitung strömen zu lassen.

Bei einer eingebauten direkt gekühlten Generator-Läuferwicklung ist die Ermittlung der Querschnittsfläche der Kühlkanäle und der Wicklungsleiter schwierig. Dies ist besonders schwierig, wenn keine ausreichende Dokumentation zu den Generator-Läuferwicklungen vorhanden ist.

Die Querschnittsfläche der Kühlkanäle wird daher abgeschätzt, was zu sehr ungenauen Ergebnissen führen kann. Eine weitere Möglichkeit, die Querschnittsfläche der Kühlkanäle zu bestimmen, besteht darin, die einzelnen Generator-Läuferwicklungen auszubauen und anschließend auszumessen. Dieses Verfahren ist aber teuer und zeitaufwändig.

In der US 5,207,089 wird ein Verfahren zur Messung der Querschnittsfläche einer Düse mittels eines pneumatischen Durchflussverfahrens offenbart.

Die DE 1 051 520 offenbart eine Vorrichtung zum Prüfen der Öffnungen in Düsen und Kapillarrohren mittels eines Lufteinziehverfahrens.

Aufgabe der vorliegenden Erfindung ist es, ein einfaches und genaues Verfahren zur Ermittlung des Querschnitts eines Leiters anzugeben.

Die Aufgabe wird gelöst durch ein Verfahren zur Ermittlung des Querschnitts eines Leiters, wobei der Leiter im wesentlich länglich ausgebildet ist und in Längsrichtung einen im Wesentlichen konstanten Querschnitt aufweist. Der Leiter weist hierbei zumindest einen Kühlkanal mit einem in Längsrichtung im Wesentlichen konstanten Kühlkanalquerschnitt auf, und das Verfahren umfasst folgende Schritte:

  a) Ankoppeln einer Messanordnung, umfassend einen Srömungsmediumbehälter, an den Kühlkanal des Leiters;
  b) Öffnen eines Ventils, damit das Strömungsmedium durch den Kühlkanal strömt;
  c) Messung eines Wertes mindestens einer physikalischen Größe des strömenden Strömungsmediums an einer ersten Stelle des Kühlkanals, wobei die physikalische Größe eine Funktion des Kühlkanalquerschnitts ist;
  d) Ermittlung des Kühlkanalquerschnitts;
  e) Berechnung des Leiterquerschnitts durch Subtraktion des Kühlkanalquerschnitts von dem Gesamtleiterquerschnitt, der durch die Leiterabmessungen ermittelt wird.

Die Erfindung nutzt die Erkenntnis aus, dass ein durch einen Kühlkanal strömendes Strömungsmedium physikalischen Gesetzen unterliegt und durch die Ermittlung einer physikalischen Größe, die eine Funktion des Kühlkanalquerschnitts ist, eine Ermittlung des Kühlkanalquerschnitts möglich ist. Jedes Strömungsmedium unterliegt bei der Durchströmung eines Kühlkanals physikalischen Gesetzen, wie z. B. dem Gesetz nach Hagen-Poiseuille. Durch Messung einer physikalischen Größe des Strömungsmediums kann der Kühlkanalquerschnitt ermittelt werden. Die Erfindung geht hierbei von dem Gedanken aus, dass eine Messanordnung, die einen Strömungsmediumbehälter umfasst, an den Kühlkanal des Leiters angekoppelt wird. Der Anschluss kann z. B. durch eine Gasanschlusskammer an den oder die Gaseintrittsöffnung eines Leiters in einem Wickelkopfraum in geeigneter Weise angebracht werden. Zum Beispiel kann dieser Anschluss durch Formpassung und Dichtungsmittel oder durch Abklebung erfolgen. Zumindest muss sichergestellt werden, dass aus dem Strömungsmediumbehälter ausströmendes Strömungsmedium vollständig in den Kühlkanal des Leiters eintritt. Es sollte vermieden werden, dass Leckluft austritt. Durch Öffnung eines Ventils strömt Strömungsmedium aus dem Strömungsmediumbehälter in den Kühlkanal. Das Strömungsmedium tritt anschließend an einer geeigneten Stelle aus dem Leiter wieder hinaus. Zum Beispiel kann das Strömungsmedium in einer Ballenmitte aus der Wicklung austreten. Weitere Kühlkanalaustritte im Wickelkopf sind dabei in geeigneter Weise dicht zu verschließen, so dass sichergestellt ist, dass das Strömungsmedium nur über einen einzigen Weg durch den Leiter strömen kann. Durch die Messung eines Wertes zumindest einer physikalischen Größe des strömenden Strömungsmediums an einer ersten Stelle des Kühlkanals, wird der Kühlkanalquerschnitt ermittelt. Die physikalische Größe muss hierbei eine Funktion des Kühlkanalquerschnittes sein. Sobald der Kühlkanalquerschnitt ermittelt werden konnte, wird der Leiterquerschnitt durch Subtraktion des Kühlkanalquerschnittes von dem Gesamtwert des Querschnittes ermittelt. Der Gesamtwert des Querschnitts kann beispielsweise durch Leiteraußenabmessungen ermittelt werden. Bei einem rechtwinkligen Leiter wird der Gesamtleiterquerschnitt aus der Breite multipliziert mit der Höhe des Leiters gebildet. Sofern ein Leiter mehrere Kühlkanäle aufweist, sollte jeder Kühlkanal mit dem Verfahren ausgemessen werden.

In einer Weiterbildung der Erfindung wird der Wert der mindestens einen physikalischen Größe an einer zweiten Stelle des Kühlkanals gemessen.

Durch das Hinzufügen einer zweiten Messstelle an einer zweiten Stelle des Kühlkanals wird die Messgenauigkeit der Messanordnung erhöht. In erster Näherung unterliegt eine Strömung einem Antrieb der durch einen Druckunterschied hervorgerufen wird. In laminaren Strömungen erfolgt ein Druckabfall in Richtung der Strömung. Der gemessene Druck an zwei Stellen des Kühlkanals würde zwei unterschiedliche Werte aufweisen und mit Hilfe dieser Werte wäre die Strömung charakterisierbar.

Vorteilhafterweise wird die mindestens eine physikalische Größe aus der Gruppe ausgewählt, die die Temperatur, den Druck und den Volumenstrom des Strömungsmediums umfasst. Eine Auswahl aus weiteren physikalische Größen ist denkbar. Die Temperatur, der Druck und der Volumenstrom sind vergleichsweise einfach messbare physikalische Größen. Gleichfalls sind diese physikalischen Größen für die Ermittlung eines Strömungsquerschnittes äußerst hilfreich.

In einer vorteilhaften Weitergestaltung erfolgt die Ermittlung des Kühlkanalquerschnitts durch Berechnung mit theoretischen Modellen. Beispielsweise kann eine kreisförmige Kühlquerschnittsfläche angenommen werden. Verschiedene physikalische Größen einer laminaren Strömung durch eine kreisförmige Querschnittsfläche können durch das Hagen-Poiseuillesche-Gesetz beschrieben werden. Durch Messen des Druckes und der Temperatur und des Volumenstromes des Strömungsmediums kann mit Hilfe des Hagen-Poiseuilleschen-Gesetzes der Kühlkanalquerschnitt ermittelt werden. Bei anderen Kühlkanalquerschnitten, wie z. B. rechteckförmigen bzw. dreieckigen müssen andere theoretische Modelle berücksichtigt werden. Da allerdings ein kreisförmiger Kühlkanalquerschnitt fertigungstechnisch am einfachsten zu gestalten ist, ist das Gesetz nach Hagen-Poiseuille das naheliegendste Modell.

In einer Weiterbildung der Erfindung erfolgt die Ermittlung des Kühlkanalquerschnitts durch Vergleich mit Referenzmessungen an einem Referenzleiter mit bekanntem Leiterquerschnitt und bekanntem Kühlkanalquerschnitt. Beispielsweise kann an einen Modellleiter mit bekannten Außenabmessungen und bekanntem Kühlkanalquerschnitt eine Messanordnung angekoppelt werden. Anschließend kann eine Messung der physikalischen Größen der Strömungen durchgeführt werden. Die daraufhin erhaltenen Werte der physikalischen Größen können in einer Datenbank gespeichert werden. Anschließend kann ein weiteres Referenzmodell eines weiteren Modellleiters mit bekannten Leiteraußenabmessungen und Kühlkanalquerschnitten verwendet werden, um physikalische Größen zu ermitteln. Eine Messung an einem Leiter, dessen Leiterabmessungen und Querschnittsfläche nicht bekannt sind, kann mit den Messungen die mit den vorgenannten Messverfahren ermittelt wurden verglichen werden. Mit dem Vergleich der gemessenen physikalischen Größen und den referenzierten physikalischen Größen kann der Kühlkanalquerschnitt ermittelt werden.

Zweckdienlicherweise wird als Strömungsmedium Wasserstoff ($H_2$) eingesetzt. Da Wasserstoff im Generatorenbau bevorzugt zu Kühlungszwecken verwendet wird, bietet es sich an, Wasserstoff als Strömungsmedium zu verwenden.

In Generatoren, in denen Luft als Kühlungsmittel verwendet wird, bietet es sich an, Luft als Strömungsmedium einzusetzen.

Genauso gut können in Generatoren, in denen Flüssigkeiten als Kühlmittel eingesetzt werden, die Messanordnungen mit einer Flüssigkeit als Strömungsmedium verwendet werden.

Schließlich wird das Verfahren an einem Leiter einer Generatorwicklung eingesetzt.

Anhand der Beschreibung und der Figuren werden Ausführungsbeispiele der Erfindung erläutert. Dabei haben mit denselben Bezugzeichen versehene Komponenten die gleiche Funktionsweise.

Es zeigen

Figur 1    eine schematische Darstellung eines Leiters;

Figur 2    eine Querschnittsansicht des Leiters;

Figur 3    eine schematische Darstellung des Leiters mit zwei Kühlkanälen;

Figur 4    eine schematische Darstellung einer Messanordnung, die an einem Leiter angekoppelt ist.

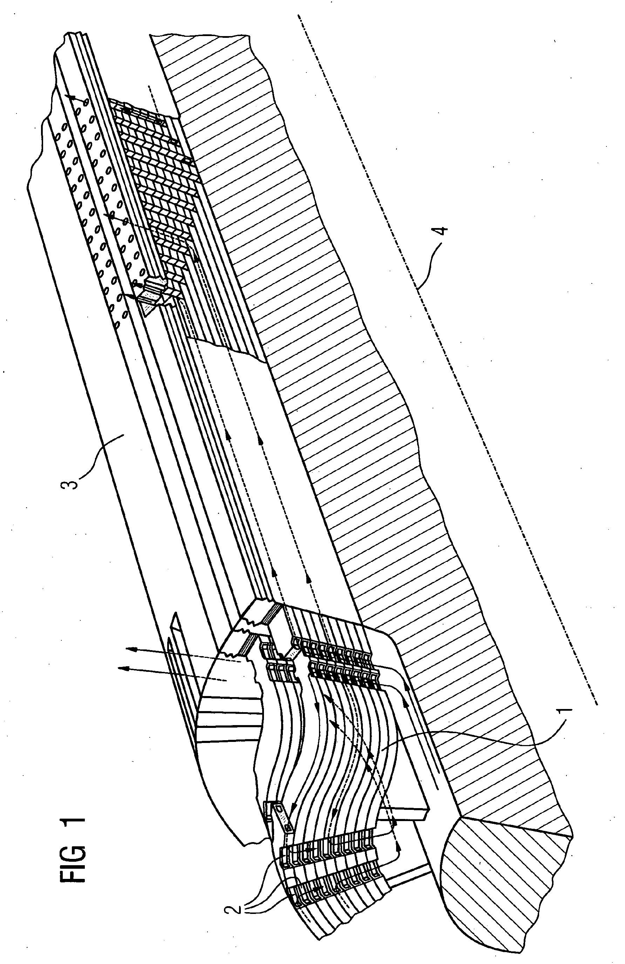

In der Figur 1 ist in schematischer Weise ein Leiter 1 dargestellt, der mehrere Kühlkanäle 2 aufweist. Der Übersichtigkeit wegen sind in der Figur 1 lediglich drei Kühlkanäle mit dem Bezugszeichen 2 versehen. Im Betrieb strömt durch den Leiter 1 ein vergleichsweise hoher elektrischer Strom, der zu einer starken Erwärmung des Leiters 1 führt. Der Leiter 1 weist Bohrungen auf, wobei die Kühlkanäle 2 jeweils einen Querschnitt aufweisen, der in Längsrichtung im Wesentlichen konstant ist. Der Leiter 1 ist auf einer Anordnung 3 angebracht. Die Anordnung 3 mit dem Leiter 1 ist über eine Rotationsachse 4 drehbar gelagert. Im Betrieb strömt durch den Kühlkanal 2 ein Strömungsmedium. Beispielsweise kann Wasserstoff ($H_2$), Luft oder Flüssigkeit als Strömungsmedium dienen. Es sind aber auch andere Strömungsmedien denkbar.

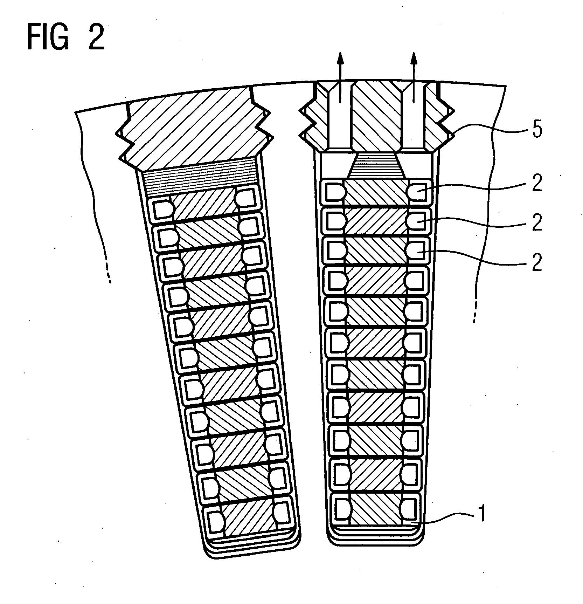

In der Figur 2 ist eine Querschnittsansicht des Leiters 1 zu sehen. Der Leiter 1 wird über Nuten 5 an die Anordnung 3 angekoppelt. Der Leiter 1 ist länglich ausgebildet und weist in Längsrichtung einen im Wesentlichen konstanten rechteckförmigen Querschnitt auf. Der Leiter 1 weist mehrere Kühlkanäle 2 auf. Der Übersichtlichkeit wegen sind lediglich drei Kühlkanäle mit den Bezugszeichen 2 versehen.

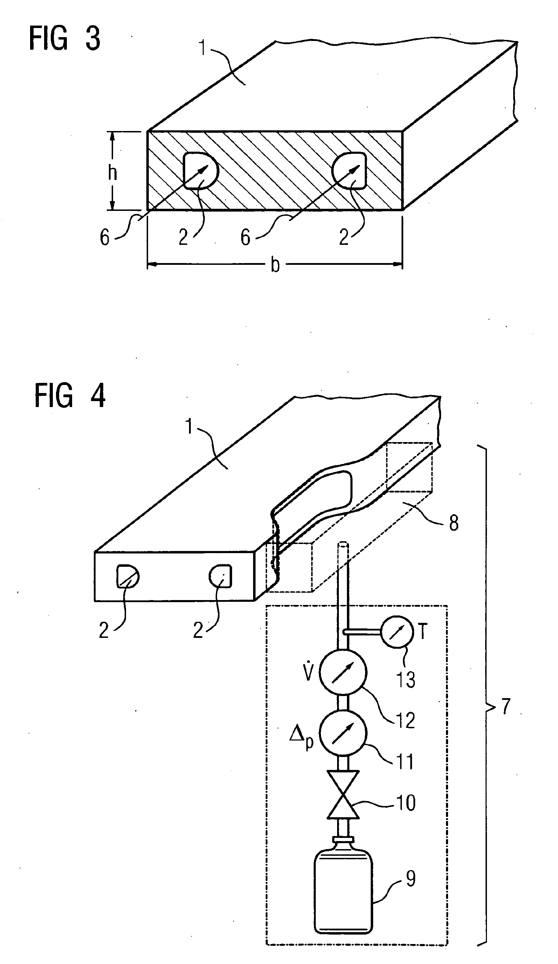

In der Figur 3 ist eine schematische Ansicht des Leiters 1 mit zwei Kühlkanälen 2 dargestellt. Im Betrieb strömt ein Strömungsmedium, das man auch als Kühlmedium bezeichnen kann, in einer Strömungsrichtung 6 durch den Kühlkanal 2. Die physikalischen Größen, die das Strömungsmedium charakterisieren, wie z. B. der Druck, die Temperatur oder der Volumenstrom ändern sich je nach geometrischer Form des Kühlkanalquerschnittes. Beispielsweise ist der Druck einer Strömung bei einer kreisförmigen Querschnittsfläche anders als bei einer rechteckförmigen Querschnittsfläche. Und gerade diesen Effekt nutzt die Erfindung aus.

In der Figur 4 ist eine Messanordnung 7 dargestellt. Die Messanordnung 7 umfasst eine Gasanschlusskammer 8, einen Strömungsmediumbehälter 9, ein Ventil 10, einen Druckmesser 11, einen Volumenstrommesser 12 und einen Temperaturmesser 13. Geeigneter Weise sollte die Gasanschlusskammer 8 möglichst dicht an den Leiter 1 angekoppelt werden. Es sollte sichergestellt sein, dass der Kühlkanal 2 keine Lecks aufweist. Geeigneter Weise sollte an einer zweiten Stelle des Kühlkanals 2 eine weitere Messanordnung 7 vorgesehen sein, die im Wesentlichen die gleichen Messapparate aufweist wie die Messanordnung 7, die an der ersten Stelle angekoppelt wird.

Zunächst wird das Ventil 10 geöffnet, damit das Strömungsmedium an der ersten Stelle des Kühlkanals 2 in den Kühlkanal 2 strömen kann. Anschließend wird mindestens eine physikalische Größe des Strömungsmediums gemessen, wobei die physikalische Größe eine Funktion des Kühlkanalquerschnittes ist. Die physikalische Größe ist zum Beispiel aus der Gruppe ausgewählt, die die Temperatur, den Druck und den Volumenstrom des Strömungsmediums umfasst. Es genügt, eine physikalische Größe zu ermitteln. Die Messgenauigkeit wird jedoch erhöht, wenn mehrere physikalische Größen ermittelt werden. Des Weiteren wird die Messgenauigkeit erhöht, wenn an einer zweiten Stelle des Kühlkanals Werte derselben physikalischen Größe ermittelt werden, da dazu mit Differenzwerten für die physikalische Größe gearbeitet werden kann. Dies kann ein sonst erforderliches Kalibrieren ersetzen.

Anhand theoretischer Modelle wie z. B. dem Hagen-Poiseuilleschen-Gesetz, kann der Kühlkanalquerschnitt ermittelt werden. Die Strömung durch einen kreisförmigen Querschnitt kann dadurch folgendermaßen beschrieben werden:

$$\frac{v}{t} = \frac{\alpha \bullet R^4 \bullet \Delta p}{\mu \bullet l}, \; \alpha = \text{Konstante}, \; R = \text{Radius}, \; \frac{v}{t} = \text{Volumenstrom}, \; \Delta P$$

$$= \text{Druckunterschied}, \; \mu = \text{Viskosität}, \; l = \text{Länge}$$

Sofern der Kühlkanalquerschnitt eine andere Geometrie, abweichend von der kreisförmigen, aufweist, müssen andere theoretische Modelle berücksichtigt werden.

Der Kühlkanalquerschnitt kann aber ebenso durch einen Vergleich mit Referenzmessungen an einem Referenzleiter mit bekanntem Leiterquerschnitt und bekanntem Kühlkanalquerschnitt erfolgen.

Der Gesamtleiterquerschnitt kann anschließend durch Subtraktion des Kühlkanalquerschnitts von dem Gesamtleiterquerschnitt, der durch die Leiteraußenabmessungen ermittelt wird, berechnet werden.

In der Regel strömt das Strömungsmedium aus dem elektrischen Leiter bei Atmosphärendruck wieder aus.

Vorteilhafterweise sollte bei einer Messung der Volumenstrom mit dem Einstellventil so eingestellt werden, dass die im Betrieb vorherrschenden Strömungsverhältnisse in den Kühlkanälen herrschen.

Mit der Messanordnung 7 können auch direkt wassergekühlte Leiter eingesetzt werden.

Das Verfahren kann dort eingesetzt werden, wo eine Dokumentation über die genauen Abmessungen des Leiters keine Dokumentation vorherrscht. Wenn der Kühlkanalquerschnitt nicht bekannt ist, ist es für den Betreiber eines Generators schwierig, einen Kühlkreislauf zu ermitteln, der genügend Strömungsmedium liefert, um eine möglichst gute Kühlung zu erwirken. Auch Leistungssteigerungen durch die Erhöhung des Druckes des Strömungsmediums sind durch die genaue Kenntnis der Strömungswiderstände in den Läuferleitern einfacher möglich. Die genaue Kenntnis der Strömungswiderstände können durch die Messanordnung 7 zur Verfügung stehen.

Der in Figur 3 dargestellte Leiter hat eine Höhe h und eine Breite b. Die Leiterquerschnittsfläche ergibt sich somit aus $A_1 = b*h$. Den Kühlkanalquerschnitt kann man mit dem Buchstaben $A_K$ beschreiben. Die Querschnittsfläche des Leiters ergibt sich somit zu $A_{Cu} = A_2 - A_K$.

Das Verfahren kann bei Leitern einer Generatorwicklung eingesetzt werden. Andere Einsatzgebiete sind denkbar.

**Patentansprüche**

1. Verfahren zur Ermittlung des Querschnitts eines Leiters (1),
   wobei der Leiter im Wesentlichen länglich ausgebildet ist und in Längsrichtung einen im Wesentlichen konstanten Querschnitt aufweist,
   wobei der Leiter (1) zumindest einen Kühlkanal (2) mit einem in Längsrichtung im Wesentlichen konstanten Kühlkanalquerschnitt aufweist,
   und das Verfahren folgende Schritte umfasst:

   a) Ankoppeln einer Messanordnung (7), umfassend einen Srömungsmediumbehälter (9), an den Kühlkanal (2) des Leiters (1);
   b) Öffnen eines Ventils(10), damit das Strömungsmedium durch den Kühlkanal (2) strömt;
   c) Messung eines Wertes mindestens einer physikalischen Größe des strömenden Strömungsmediums an einer ersten Stelle des Kühlkanals (2), wobei die physikalische Größe eine Funktion des Kühlkanalquerschnitts ist;
   d) Ermittlung des Kühlkanalquerschnitts;
   e) Berechnung des Leiterquerschnitts durch Subtraktion des Kühlkanalquerschnitts von dem Gesamtleiterquerschnitt, der durch die Leiteraußenabmessungen ermittelt wird.

2. Verfahren nach Anspruch 1,
   bei dem der Wert der mindestens einen physikalischen Größe an einer zweiten Stelle des Kühlkanals (2) gemessen wird.

3. Verfahren nach Anspruch 1,
   bei dem die mindestens eine physikalische Größe aus der Gruppe ausgewählt ist, die die Temperatur, den Druck und den Volumenstrom des Strömungsmediums umfasst.

4. Verfahren nach einem der vorhergehenden Ansprüche,
   bei dem der Schritt d) durch Berechnung mit theoretischen Modellen erfolgt.

5. Verfahren nach einem der Ansprüche 1 bis 3,
   bei dem der Schritt d) durch Vergleich mit Referenzmessung an einem Referenzleiter mit bekanntem Leiterquerschnitt und bekanntem Kühlkanalquerschnitt erfolgt.

6. Verfahren nach einem der vorhergehenden Ansprüche,
   bei dem Wasserstoff ($H_2$) als Strömungsmedium eingesetzt wird.

7. Verfahren nach einem der vorhergehenden Ansprüche,
   bei dem Luft als Strömungsmedium eingesetzt wird.

8. Verfahren nach einem der vorhergehenden Ansprüche,
   bei dem eine Flüssigkeit als Strömungsmedium eingesetzt wird.

9. Verfahren nach einem der vorhergehenden Ansprüche,
   das an einem Leiter (1) einer Generatorwicklung eingesetzt wird.

**Claims**

1. Method for determining the cross section of a conductor (1),
   in which the conductor is of substantially elongated design and has a substantially constant cross section in a longitudinal direction,
   in which the conductor (1) has at least one cooling channel (2) with a substantially constant cooling channel cross section in a longitudinal direction,

and the method comprises the following steps:

a) coupling a measuring arrangement (7), comprising a flow medium container (9), to the cooling channel (2) of the conductor (1);
b) opening a valve (10) so that the flow medium flows through the cooling channel (2);
c) measuring a value of at least one physical variable of the flowing flow medium at a first point of the cooling channel (2), the physical variable being a function of the cooling channel cross section;
d) determining the cooling channel cross section;
e) calculating the conductor cross section by subtracting the cooling channel cross section from the overall conductor cross section, which is determined by the conductor external dimensions.

2. Method according to Claim 1, in which the value of the at least one physical variable is measured at a second point of the cooling channel (2).

3. Method according to Claim 1, in which the at least one physical variable is selected from the group which comprises the temperature, the pressure and the volume flow of the flow medium.

4. Method according to one of the preceding claims, in which the step d) is performed by calculating with the aid of theoretical models.

5. Method according to one of Claims 1 to 3, in which step d) is performed by comparison with reference measurement and a reference conductor having a known conductor cross section and a known cooling channel cross section.

6. Method according to one of the preceding claims, in which hydrogen ($H_2$) is used as flow medium.

7. Method according to one of the preceding claims, in which air is used as flow medium.

8. Method according to one of the preceding claims, in which a liquid is used as flow medium.

9. Method according to one of the preceding claims which is used as a conductor (1) of a generator winding.


**Revendications**

1. Procédé de détermination de la section transversale d'un conducteur ( 1 ),
dans lequel le conducteur est sensiblement oblong et a, dans la direction longitudinale, une section transversale sensiblement constante,
dans lequel le conducteur ( 1 ) a au moins un canal ( 2 ) de refroidissement, ayant une section transversale de canal de refroidissement sensiblement constante dans la direction longitudinale,
et le procédé comprend les stades suivants :

a ) on couple un dispositif ( 7 ) de mesure, comprenant un récipient ( 9 ) de fluide donnant un écoulement, au canal ( 2 ) de refroidissement du conducteur ( 1 ) ;
b ) on ouvre un robinet ( 10 ), afin que le fluide donnant un écoulement s'écoule dans le canal ( 2 ) de refroidissement ;
c ) on mesure une valeur d'au moins une grandeur physique du fluide donnant un écoulement qui s'écoule en un premier point du canal ( 2 ) de refroidissement, la grandeur physique étant une fonction de la section transversale du canal de refroidissement ;
d ) on détermine la section transversale du canal de refroidissement ;
e ) on calcule la section transversale du conducteur en soustrayant la section transversale du canal de refroidissement de la section transversale globale du conducteur, qui est déterminée par les dimensions extérieures du conducteur.

2. Procédé suivant la revendication 1,
dans lequel on mesure la valeur de la au moins une grandeur physique en un deuxième point du canal ( 2 ) de refroidissement.

3. Procédé suivant la revendication 1,

dans lequel on choisit la au moins une grandeur physique dans le groupe qui comprend la température, la pression et le courant en volume du fluide donnant un écoulement.

4. Procédé suivant l'une des revendications précédentes,
   dans lequel on effectue le stade d ) par un calcul par des modèles théoriques.

5. Procédé suivant l'une des revendications 1 à 3,
   dans lequel on effectue le stade d ) en comparant une mesure de référence sur un conducteur de référence, de section transversale de conducteur connue et de section transversale de canal de refroidissement connue.

6. Procédé suivant l'une des revendications précédentes,
   dans lequel on utilise, comme fluide donnant un écoulement, de l'hydrogène ( H2 ).

7. Procédé suivant l'une des revendications précédentes,
   **caractérisé en ce que** l'on utilise, comme fluide donnant un écoulement, de l'air.

8. Procédé suivant l'une des revendications précédentes,
   dans lequel on utilise, comme fluide donnant un écoulement, un liquide.

9. Procédé suivant l'une des revendications précédentes,
   dans lequel on l'utilise sur un conducteur ( 1 ) d'un enroulement de générateur.

FIG 1

FIG 2

FIG 3

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5207089 A
- DE 1051520